# EUROPÄISCHE PATENTSCHRIFT

(11) **EP 0 717 529 B1**
(45) Veröffentlichungstag und Bekanntmachung des Hinweises auf die Patenterteilung: **09.04.2003**
(21) Anmeldenummer: 95119568.4
(22) Anmeldetag: 12.12.1995
(51) Int. Cl.: H04L 7/033

(54) **Verfahren und Vorrichtung zur empfängerseitigen RDS-Phasen-Synchronisation**
Method and circuit arrangement for the phase synchronisation on reception of RDS-signals
Procédé et circuit de synchronisation en phase à la réception de signaux RDS

(30) Priorität: 14.12.1994 DE 4444601
(43) Veröffentlichungstag der Anmeldung: 19.06.1996
(73) Patentinhaber: SGS-THOMSON MICROELECTRONICS GMBH, 85630 Grasbrunn (DE)
(72) Erfinder: Roither, Gerhard, D-81827 München (DE)
(74) Vertreter: Klunker . Schmitt-Nilson . Hirsch

(56) Entgegenhaltungen:
- DE-A- 3 245 438
- US-A- 3 805 180
- US-A- 4 222 013
- SIEMENS COMPONENTS, Bd. 25, Nr. 3, 1.Juli 1990 Seiten 86-91, XP 000143062 DIETZE A 'SDA 1000 DECODES RADIO DATA SIGNALS'

## Beschreibung

Die Erfindung betrifft ein Verfahren zur Phasensynchronisation eines empfängerseitig erzeugten Bitraten-Taktsignals mit einem empfängerseitig demodulierten, biphasenmodulierten digitalen RDS-Signal, die beide die gleiche Bitrate aufweisen.

Solch ein Verfahren ist aus dem Dokument XP143062 bekannt.

Bei dem sogenannten RDS (Radio Data System) wird von Rundfunksendern RDS-Information abgestrahlt, die Senderidentifikation, alternative Frequenzen des Senders, Programmtypen usw. übertragen. Näheres ist in der Druckschrift "Specifications Of The Radio Data System RDS For VHF/FM Sound Broadcasting", Tech. 3244-E, Technical Center Of The European Broadcasting Union Brüssel, März 1984, beschrieben.

RDS-Information wird in Form eines mit einer binären Bitfolge biphasenmodulierten Signals übertragen. Bei einem derartigen biphasenmodulierten Signal kann man jedes RDS-Bit in zwei Halbbits unterteilen. Beim Halbbitübergang zwischen zwei zu einem RDS-Bit gehörenden Halbbits findet eine Phasenumkehr statt. Beim Bitwechsel zwischen zwei benachbarten RDS-Bits, die unterschiedliche Logikwerte "0" und "1" darstellen, findet in der Trägerschwingung des übertragenen RDS-Signals ein Phasensprung von 180° statt. Als Träger für das RDS-Signal wird eine Trägerfrequenz von 57 kHz verwendet. Dieser Träger wird senderseitig vor der Aussendung des Rundfunksignals unterdrückt. Daher muß die Trägerfrequenz empfängerseitig wiedergewonnen werden, was mit Hilfe eines empfängerseitigen Quarzoszillators bewirkt wird. Die RDS-Information wird senderseitig mit einer Bitrate von 1187,5 Hz übertragen. Um das empfangene RDS-Signal empfängerseitig demodulieren zu können, muß empfängerseitig ein Bitraten-Taktsignal mit der gleichen Rechteckfrequenz erzeugt werden. Dies geschieht durch Frequenzteilung des empfängerseitig erzeugten 57 kHz Oszillatorsignals durch 48.

Damit das empfängerseitig demodulierte digitale RDS-Signal richtig dekodiert werden kann, muß das empfängerseitig erzeugte Bitraten-Taktsignal in Phasensynchronisation mit dem demodulierten digitalen RDS-Signal sein. Dies wird herkömmlicherweise mit einer sogenannten "Costas-Loop" bewirkt, die auf Flankendeckung von empfängerseitig demoduliertem digitalem RDS-Signal und empfängerseitig erzeugtem Bitraten-Taktsignal regelt, unabhängig davon, ob zeitlich gleichgerichtete oder gegenläufig gerichtete Flanken von RDS-Signal und Bitraten-Taktsignal zur Deckung gebracht werden.

Eine normale PLL verwendet pro Bitperiode einen Probenwert eines Signals, um es mit einem anderen Signal phasenmäßig zu synchronisieren. Bei der Costas-Loop wird pro Bitperiode ein Probenpaar aus zwei um 90° zueinander verschobenen Proben verwendet. Bei der Costas-Loop wird zum Zeitpunkt beispielsweise der Anstiegsflanke ein erster Probenwert des empfängerseitig demodulierten digitalen RDS-Signals genommen und nach einem einem Phasenwinkel von 90° entsprechenden späteren Zeitpunkt wird ein zweiter Probenwert des digitalen RDS-Signals genommen. Haben die beiden jeweils zu einem Probenpaar gehörenden Proben unterschiedliche Digitalwerte des RDS-Signals, wird davon ausgegangen, daß das Bitraten-Taktsignal dem digitalen RDS-Signal phasenmäßig vorausläuft. Haben die beiden zu einem Probenpaar gehörenden Proben des RDS-Bitsignals dagegen gleiche Digitalwerte, wird davon ausgegangen, daß das empfängerseitig erzeugte Bitraten-Taktsignal dem RDS-Signal phasenmäßig hinterherläuft. Dieser Unterschied in den Probenwerten der je zusammengehörenden Probenpaare wird dazu verwendet, Phasensynchronisation zwischen den Flanken von RDS-Signal und Bitraten-Taktsignal herzustellen. Haben die Probenwerte der je zusammengehörigen Probenpaare unterschiedlichen Digitalwert, wird das Bitraten-Taktsignal um einen positiven Phasenwinkel vorbestmunten Phasenwinkelbetrags verschoben. Weisen die beiden Proben der Probenpaare dagegen gleiche Digitalwerte auf, wird das Bitraten-Taktsignal um einen negativen Phasenwinkel des vorbestimmten Phasenwinkelbetrags verschoben.

Bei dieser bekannten Phasensynchronisationsmethode treten für den Fall, daß das empfängerseitig erzeugte Bitraten-Taktsignal dem demodulierten digitalen RDS-Signal vorausläuft, dann Probenpaare auf, deren beide Probenwerte gleiche Digitalwerte haben, wenn zwei benachbarte RDS-Bits aufeinandertreffen, die einen unterschiedlichen Logikwert "0" bzw. "1" darstellen. An diesen Stellen nimmt die Phasensynchronisationsschaltung fehlerhaft an, daß das Bitraten-Taktsignal dem RDS-Signal phasenmäßig hinterherläuft. Bei solchen Logikwertwechseln benachbarter RDS-Bits kommt es daher zu einer fehlerhaften Regelung in der Phasensynchronisationsschaltung.

Der Erfindung liegt die Aufgabe zugrunde, ein Verfahren und eine Vorrichtung zur Phasensynchronisation anzugeben, bei denen solche Synchronisierungsfehler vermieden werden.

Eine verfahrensmäßige Lösung dieser Aufgabe ist im Anspruch 1 angegeben und kann den Ansprüchen 2 bis 4 gemäß vorteilhaft weitergebildet werden. Eine vorrichtungsmäßige Lösung dieser Aufgabe ist in Anspruch 5 angegeben und kann den Ansprüchen 6 bis 13 entsprechend weitergebildet werden. Mit einer erfindungsgemäßen Phasensynchronisationsvorrichtung lassen sich eine RDS-Bit-PLL gemäß Anspruch 14, damit ein Radioempfangsgerät gemäß Anspruch 15 und ein RDS-Rundfunksystem gemäß Anspruch 16 realisieren.

Während bei dem herkömmlichen Phasensynchronisationsverfahren Proben von dem empfängerseitig demodulierten digitalen RDS-Signal genommen werden und die Probenzeitpunkte durch die Flanken des empfängerseitig erzeugten Bitraten-Taktsignals bestimmt werden, werden erfindungsgemäß Proben von dem Bitraten-Taktsignal genommen, wobei die Probenzeitpunkte durch die Flanken des demodulierten digitalen RDS-Signals bestimmt werden. Dies führt dazu, daß bei einem Phasenvorlauf des Bitraten-Taktsignals gegenüber dem RDS-Signal die Probenwerte aller Probenpaare gleiche Digitalwerte aufweisen, auch an den Stellen, an welchen zwei RDS-Bits mit unterschiedlichem Logikwert aufeinandertreffen. Im Fall des Nachlaufs des Bitraten-Taktsignals gegenüber dem RDS-Signal weisen die beiden Probenwerte aller Probenpaare ungleiche Digitalwerte auf. An den Stellen, an denen zwei RDS-Bits mit unterschiedlichem Logikwert nebeneinanderliegen, findet kein Flankenübergang im RDS-Signal statt und daher werden an diesen Stellen keine Proben des Bitratentaktsignals entnommen. Bei dem erfindungsgemäßen Phasensynchronisationsverfahren tritt also unabhängig davon, ob RDS-Bits mit gleichem Logikwert oder mit unterschiedlichem Logikwert einander benachbart sind, für alle Probenpaare immer das zum Phasenvorlauf oder zum Phasennachlauf des Bitraten-Taktsignals passende Paar von Digitalwerten der jeweiligen beiden Probenwerte auf. Es kommt also bei dem erfindungsgemäßen Phasensynchronisationsverfahren auch an den Stellen, an denen RDS-Bits mit unterschiedlichem Logikwert benachbart sind, nicht zu Fehlern in der Regelung der Phasenlage.

Bevorzugtermaßen werden die beiden Probenwerte eines jeden Probenpaares einem Vergleich ihrer Digitalwerte unterzogen, derart, daß bei Gleichheit der Digitalwerte ein erstes Vergleichsergebnissignal und bei Ungleichheit der Digitalwerte ein zweites Vergleichsergebnissignal erzeugt wird. Die beiden Vergleichsergebnissignale werden integriert, wobei eines der beiden Vergleichsergebnissignale zu einer Erhöhung und das andere Vergleichsergebnissignal zu einer Verringerung des Integrationswertes führt. Beim Erreichen einer oberen Integrationswertgrenze in einer ersten Richtung und beim Erreichen einer unteren Integrationswertgrenze in der entgegengesetzten Richtung wird das Bitraten-Taktsignal um den Phasenwinkel vorbestimmten Phasenwinkelbetrages in der einen bzw. in der anderen Richtung verschoben.

Auf diese Weise wird regelnd in die relative Phasenlage zwischen RDS-Signal und Bitraten-Taktsignal immer erst dann eingegriffen, wenn eine Phasenvorauseilung bzw. ein Phasennachlauf des Bitraten-Taktsignals gegenüber dem RDS-Signal für eine vorbestimmte Zeitdauer ermittelt worden ist.

Bei einer besonders bevorzugten Ausführungsform ist zwischen einer vorbestimmten Anzahl unterschiedlicher Integrationswertgrenzen, durch deren Erreichen eine Phasenverschiebung ausgelöst wird, wählbar. Dabei kann mann eine derartige Auswahl vornehmen, daß bei einer Umschaltung des RDS-Empfängers auf eine andere als die bisher empfangene Senderempfangsfrequenz niedrige Integrationswertgrenzen und nach Ablauf einer vorbestimmten Zeitspanne nach dieser Umschaltung oder bei der Feststellung des Einrastens des Empfängers auf die andere Senderempfangsfrequenz höhere Integrationswertgrenzen ausgewählt werden.

Dies führt zu dem Vorteil, daß nach einer Frequenzumschaltung des Empfängers ein schnellwirkender Regelvorgang abläuft und daß nach dem Einrasten des Empfängers auf die andere Senderempfangsfrequenz eine behutsamere Regelung durchgeführt wird, bei welcher sich Störungen weniger auswirken können.

Eine bevorzugte Ausführungsform einer erfindungsgemäßen Phasensynchronisationsvorrichtung weist einen empfängerseitigen Oszillator und einen programmierbaren Frequenzteiler auf, mit dem die Ausgangsfrequenz des empfängerseitigen Oszillators (mit einer Frequenz von 57 kHz) auf die Frequenz des Bitraten-Taktsignals (1187,5 Hz) herabteilbar ist und dessen Ausgang das Bitraten-Taktsignal liefert. Mit Hilfe eines Flankendetektors wird beim Auftreten der ansteigenden und/oder der abfallenden Flanken des RDS-Signals ein erstes Abtaststeuersignal abgegeben. Mit Hilfe einer Verzögerungsschaltung wird nach Ablauf einer vorbestimmten Verzögerungszeit, die vorzugsweise einem Phasenwinkel von 90° entspricht, ein zweites Abtaststeuersignal erzeugt. Zu den Zeitpunkten des Auftretens des ersten bzw. des zweiten Abtaststeuersignals werden die jeweils vorhandenen Digitalwerte des vom programmierbaren Frequenzteiler gelieferten Bitraten-Taktsignals in eine Zwischenspeicherschaltung eingelesen. Mit deren Ausgang ist eine Vergleichsschaltung verbunden, die in Abhängigkeit davon, ob die beiden in der Zwischenspeicherschaltung jeweils gespeicherten Digitalwerte gleich oder ungleich sind, an einem Ausgang ein Gleichheitssignal oder ein Ungleichheitssignal liefert. Mit dem Ausgang der Vergleichsschaltung ist ein digitaler Integrator verbunden, mit dem die vom Ausgang der Vergleichsschaltung gelieferten Signale integrierbar sind. Beim Erreichen einer vorbestimmten oberen Integrationswertgrenze wird ein erstes Integratorausgangssignal und beim Erreichen einer vorbestimmten unteren Integrationswertgrenze wird ein zweites Integratorausgangssignal abgegeben. Der programmierbare Frequenzteiler weist einen Steuereingang auf, der mit dem Integratorausgang verbunden ist und über den der jeweilige Zählwert beim Erhalt des ersten Integratorausgangssignals in der einen Zählrichtung und beim Erhalt des zweiten Integratorausgangssignals in der anderen Zählrichtung um einen vorbestimmten Zählwertbetrag veränderbar ist. Als Ergebnis wird beim Erreichen der oberen bzw. der unteren Integrationswertgrenze am Ausgang des Frequenzteilers eine nächste ansteigende bzw. abfallende Flanke des Bitraten-Taktsignals zu einem früheren bzw. späteren Zeitpunkt geliefert als wenn der Frequenzteiler vom Integrator kein Integratorausgangssignal erhalten hätte.

Die Erfindung wird nun anhand von Ausführungsformen näher erläutert. In den beigefügten Zeichnungen zeigen:
- Fig. 1: Signalverläufe, mit deren Hilfe die erfindungsgemäße Phasensynchronisationsmethode im Verhältnis zu der herkömmlichen Phasensynchronisationsmethode erläutert wird; und
- Fig. 2: ein Blockschaltbild einer Ausführungsform einer erfindungsgemäßen Phasensynchronisationsvorrichtung.

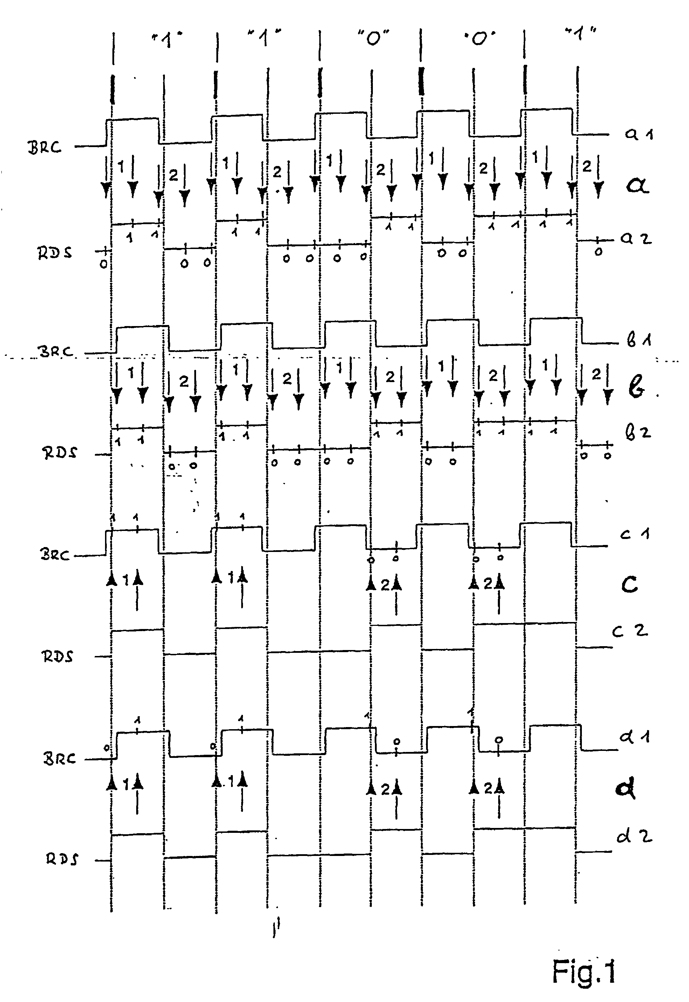

Fig. 1 zeigt vier Signalverlaufspaare a, b, c und d. Davon zeigen a2, b2, c2 und d2 je den gleichen RDS-Signalverlauf. a1, b1, c1 und d1 zeigen Signalverläufe des Bitraten-Taktsignals BRC. In den Signalverläufen a1 und c1 eilt das Bitraten-Taktsignal BRC dem RDS-Signal voraus. In den Signalverläufen b1 und d1 läuft das Bitraten-Taktsignal BRC dem RDS-Signal hinterher.

Oberhalb des Signalverlaufs a.1 sind mittels dicken vertikalen Strichen RDS-Bitgrenzen markiert. Dazwischen befindliche dünne vertikale Striche markieren für jedes RDS-Bit den Halbbitwechsel. Oberhalb dieser vertikalen Markierungen sind die Logikwerte der einzelnen RDS-Bits angegeben. Das in Fig. 1 gezeigte RDS-Signal repräsentiert somit die Logikwertfolge 11001. Wie es der RDS-Norm entspricht, weisen in den RDS-Bits mit einem Logikwert "1" die ersten Halbbits ein positives und die zweiten Halbbits ein negatives Phasenvorzeichen auf. Im Gegensatz dazu weisen RDS-Bits mit dem Logikwert "0" im ersten Halbbit ein negatives und im zweites Halbbit ein positives Phasenvorzeichen auf. Dies führt dazu, daß an den Bitgrenzen zwischen RDS-Bits mit unterschiedlichem Logikwert kein Phasenvorzeichenwechsel und daher kein Flankenübergang auftritt.

Zwischen den Signalverläufen eines jeden Signalverlaufspaars befinden sich Pfeile, die je paarweise mit der Ziffer 1 oder der Ziffer 2 gekennzeichnet sind. Bei Pfeilpaaren mit der Ziffer 1 tritt der erste Pfeil zum Zeitpunkt einer ansteigenden Signalflanke auf. Bei Pfeilpaaren mit der Ziffer 2 tritt der erste Pfeil zum Zeitpunkt einer abfallenden Signalflanke auf. Zu jedem mit einem Pfeil markierten Zeitpunkt, der von einer Flanke des einen Signals des zusammengehörigen Signalverlaufspaares bestimmt wird, wird ein Probenwert von dem anderen Signal des jeweiligen Signalverlaufspaares genommen. Sind die Pfeile nach unten gerichtet, werden in Abhängigkeit von dem Auftreten von Flanken des Bitraten-Taktsignals BRC Proben des RDS-Signals genommen. Sind die Pfeile nach oben gerichtet, werden in Abhängigkeit von Flanken des RDS-Signals Proben des Bitraten-Taktsignals BRC genommen.

Der erste Pfeil eines jeden Pfeilpaares markiert den Zeitpunkt einer Flanke des Bitraten-Taktsignals bzw. des RDS-Signals. Der zweite Pfeil eines jeden Pfeilpaares markiert einen Zeitpunkt, der um einen einem Phasenwinkel von 90° entsprechenden Zeitpunkt später liegt als die mit dem ersten Pfeil gekennzeichnete Flanke des Bitraten-Taktsignals bzw. des RDS-Signals.

Die Signalverlaufspaare a und b der Fig. 1 zeigen die herkömmliche Phasensynchronisationsmethode.

Bei jeder Flanke des Bitraten-Taktsignals BRC in den Signalsverlaufszeilen a1 und b1 wird ein Probenwert von dem RDS-Signal in den Signalverlaufszeilen a2 bzw. b2 genommen. Nach einer zeitlichen Verzögerung entsprechend einem Phasenwinkel von 90° wird ein zweiter Probenwert des RDS-Signals genommen. Diese beiden Probenwerte bilden ein Probenwertpaar. Zu jedem der mit 1 und 2 bezeichneten Pfeilpaare gehört je ein Probenwertpaar. In der Signalverlaufszeile a2 weisen die beiden Probenwerte eines jeden Probenwertpaares unterschiedliche Digitalwerte auf. Eine Ausnahme bilden Probenwertpaare, die an den Bitwechselstellen genommen worden sind, an welchen der Logikwerk des RDS-Signals wechselt. Dort weisen beide Probenwertpaare entweder den Signalwert 0 oder den Signalwert 1 auf.

Bis auf die Stellen, an denen RDS-Bits mit unterschiedlichem Logikwert einander benachbart sind, weisen im Signalverlaufspaar a also dann, wenn das Bitraten-Taktsignal dem RDS-Signal vorauseilt, die beiden Probenwerte eines jeden Probenwertpaares unterschiedlichen Signalwert auf.

Beim Signalverlaufspaar b, also dann, wenn das Bitraten-Taktsignal dem RDS-Signal nachläuft, weisen die Probenwerte eines jeden Probenwertpaares gleiche Signalwerte auf. Entweder weisen beide Probenwerte einen hohen Signalwert ("1") oder einen niedrigen Signalwert ("0") auf.

Das herkömmliche Phasensynchronisationsverfahren geht nun davon aus, daß bei dem Auftreten von Probenwertpaaren mit unterschiedlichem Signalwert das Bitraten-Taktsignal dem RDS-Signal vorauseilt und daß beim Auftreten von Probenwertpaaren mit gleichen Probenwerten das Bitraten-Taktsignal dem RDS-Signal nachläuft. Da aber dort, wo RDS-Bits mit unterschiedlichem Logikwert einander benachbart sind, auch für den Fall, daß das Bitraten-Taktsignal dem RDS-Signal vorausläuft, Probenpaare mit gleichen Probenpaarwerten auftreten, kommt es an diesen Stellen für ein dem RDS-Signal vorauslaufendes Bitraten-Taktsignal zu Fehlinterpretationen, die wiederum zu Regelungsfehlern bei der Phasensynchronisationsregelung führen.

Betrachtet man anhand der Signalverlaufspaare c und d das erfindungsgemäße Phasensynchronisationsverfahren, sieht man, daß dieses Problem mit der Erfindung überwunden worden ist.

Wie bereits erwähnt wird erfindungsgemäß so vorgegangen, daß einerseits nicht die Flanken des Bitraten-Taktsignals die Probennahmezeitpunkte bestimmen sondern die Flanken des RDS-Signals und daß andererseits nicht Proben von dem RDS-Signal sondern von dem Bitraten-Taktsignal genommen werden.

Zur zeichnerischen Vereinfachung sind für die Signalverlaufspaare c und d nicht alle Pfeilpaare eingezeichnet, zu deren Zeitpunkten Probenwertpaare genommen sind.

Betrachtet man das Signalverlaufspaar c, treten für alle Pfeilpaare 1 und 2, die Probennahmezeitpunkte anzeigen, Probenwertpaare auf, die je zwei Probenwerte des Bitraten-Taktsignals mit gleichem Signalwert enthalten. Dies gilt unabhängig davon, ob zwei benachbarte RDS-Bits gleiche oder unterschiedliche Logikwerte haben. D. h., für den Fall, daß das Bitraten-Taktsignal dem RDS-Signal vorausläuft, weisen die beiden Probenwerte wirklich aller Probenwertpaare gleichen Signalwert auf.

Betrachtet man das Signalverlaufspaar d, weisen die beiden Probenwerte eines jeden Probenwertpaares unterschiedlichen Signalwert des Bitraten-Taktsignals auf. Und dies gilt wieder ausnahmslos für sämtliche Probenwertpaare.

Dies hat zur Folge, daß bei dem erfindungsgemäßen Phasensynchronisationsverfahren das Vergleichsergebnis, ob die beiden Probenwerte eines Probenwertpaares gleichen Signalwert oder unterschiedlichen Signalwert des Bitraten-Taktsignals aufweisen, an allen Stellen des Signalverlaufs eine sichere Aussage darüber geben, ob das Bitraten-Taktsignal dem RDS-Signal vorausläuft oder nachläuft. Legt man das Vergleichsergebnis, ob die beiden Probenwerte zusammengehörender Probenwertpaare unterschiedlichen oder gleichen Signalwert haben, einer Beeinflussung der Phasenlage des Bitraten-Taktsignals derart zugrunde, daß dieses beim Auftreten von Probenwertpaaren mit Probenwerten gleichen Signalwertes um einen positiven Phasenwinkel und beim Auftreten von Probenwertpaaren mit Probenwerten unterschiedlichen Signalwerts um einen negativen Phasenwinkel verschoben wird, gibt es nicht die Regelungsfebler wie bei dem herkömmlichen Phasensynchronisationsverfahren.

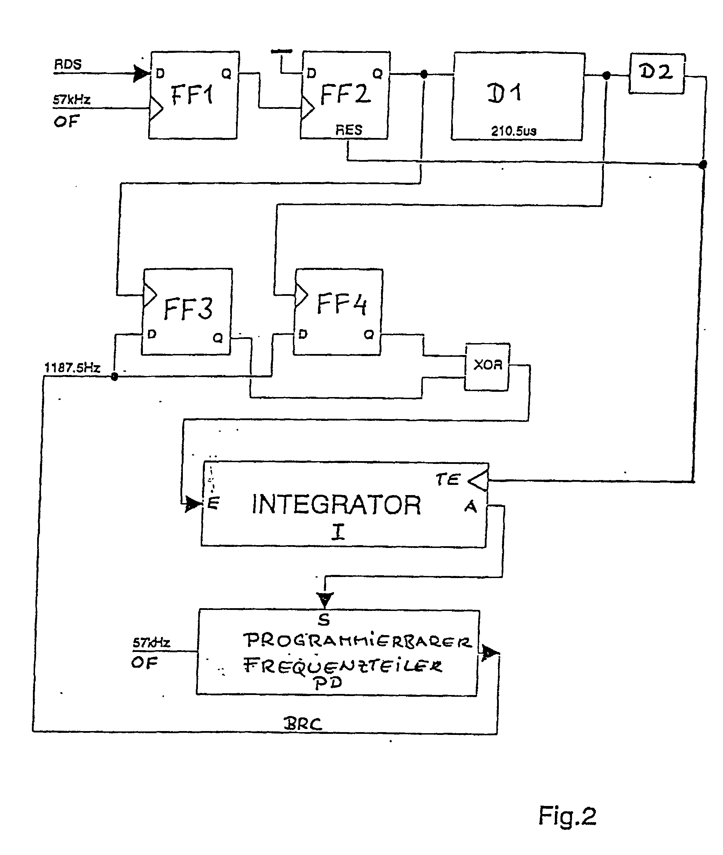

Das erfindungsgemäße Phasensynchronisationsverfahren läßt sich mit einer Phasensynchronisationsschaltung nach Fig. 2 durchführen, die nun näher betrachtet wird.

Diese Phasensynchronisationsschaltung enthält vier D-Flipflops FF1 bis FF4, zwei Verzögerungsglieder D1 und D2, einen Integrator I und einen programmierbaren Frequenzteiler PD. Dem D-Eingang von FF1 wird das empfängerseitig demodulierte, digitale RDS-Signal zugeführt. Am Takteingang von FF1 liegt eine Oszillatorfrequenz von 57 kHz. Der Q-Ausgang von FF1 ist mit einem Takteingang von FF2 verbunden. Dessen D-Eingang liegt permanent auf Masse, also einem niedrigen digitalen Signalwert. Mit dem Q-Ausgang von FF2 ist einerseits der Eingang eines ersten Verzögerungsgliedes D1 und andererseits der Takteingang von FF3 verbunden. Der Ausgang des ersten Verzögerungsgliedes D1 ist einerseits mit dem Eingang eines zweiten Verzögerungsgliedes D2 und andererseits mit dem Takteingang von FF4 verbunden. Den D-Eingängen von FF3 und FF4 wird je das vom Ausgang des programmierbaren Frequenzteilers PD gelieferte Bitraten-Taktsignal BRC mit einer Bitrate vom 1187,5 Hz zugeführt. Die Q-Ausgänge von FF3 und FF4 sind mit je einem Eingang einer Vergleichsschaltung in Form einer XOR-Verknüpfungsschaltung verbunden. Deren Ausgang ist mit einem Eingang des Integrators I verbunden. Der Ausgang des zweiten Verzögerungsgliedes D2 ist einerseits mit einem Reset-Eingang RES des FF2 und andererseits mit einem Takteingang TE des Integrators I verbunden. Der Ausgang des Integrators I ist mit einem Steueranschluß S des programmierbaren Frequenzteilers PD verbunden. Bei dem programmierbaren Frequenzteiler PD handelt es sich um einen Zähler. Dessen jeweiliger Zählstand kann über ein dem Steuereingang S zugeführtes Steuersignal um einen vorbestimmten Zählwertbetrag geändert werden. Dabei wird in den normalen Zählablauf, mit dessen Hilfe die dem programmierbaren Frequenzteiler PD eingangsseitig zugeführte Oszillatorfrequenz von 57 kHz auf die Bitrate des Bitraten-Taktsignals herabgeteilt wird, verändernd eingegriffen.

Das Flipflop FF1 bildet eine Synchronisationsstufe, mittels welcher die Flanke des empfängerseitig demodulierten digitalen RDS-Signals mit der Flanke der 57 kHz-Oszillatorfrequenz synchronisiert wird, um das RDS-Signal mit dem internen System des RDS-Empfängers zu synchronisieren. Ein bestimmter Flankenwechsel in dem am D-Eingang anliegenden RDS-Signal erscheint am Q-Ausgang von FF1 erst beim Auftreten der nächsten zugehörigen Flanke der Oszillatorfrequenz OF.

Das Flipflop FF2 bildet einen Flankendetektor, der beim Auftreten beispielsweise der ansteigenden Flanken des RDS-Signals ein erstes Abtaststeuersignal abgibt. Wenn dieses auf den Takteingang von FF3 gelangt, wird der dann gerade am D-Eingang von FF3 anliegende Signalwert des Bitraten-Taktsignals auf den Q-Ausgang von FF3 durchgeschaltet und von dort auf den einen Eingang der XOR-Verknüpfungsschaltung gegeben. Das am Q-Ausgang von FF2 auftretende erste Abtaststeuersignal wird von dem ersten Verzögerungsglied D1 um eine Zeitdauer von 210,5 µs verzögert, was einen Phasenwinkel von 90° des RDS-Signals bedeutet. Das nach dieser Verzögerungszeit am Ausgang des Verzögerungsgliedes D1 auftretende Signal stellt ein zweites Abtaststeuersignal dar. Wenn dieses auf den Takteingang von FF4 gelangt, wird der am D-Eingang von FF4 zu diesem Zeitpunkt anliegende Signalwert des Bitraten-Taktsignals zum Q-Ausgang von FF4 durchgeschaltet und von dort auf den anderen Eingang von XOR gegeben. Die Flipflops FF3 und FF4 bilden zusammen eine Zwischenspeicherschaltung, in welchen zu den beiden Abtast- oder Probeentnahmezeitpunkten jeweils auftretenden Signalwerte des Bitraten-Taktsignals zwischengespeichert und für einen Vergleich mit Hilfe des XOR-Verknüpfungsgliedes verfügbar gehalten werden.

Am Ausgang von XOR erscheint in Abhängigkeit davon, ob die beiden Probenwerte des jeweils gemessenen Probenwertpaares gleichen oder verschiedenen Signalwert haben, ein Gleichheitssignal in Form eines Logikwertes "0" bzw. ein Ungleichheitssignal in Form eines Logikwertes "1". Diese Logikwerte werden auf den Eingang E des Integrators I gegeben. Dieser Integrator I ist als Aufwärts/Abwärts-Zähler ausgebildet und zu dem Zeitpunkt, zu dem seinem Takteingang TE vom Ausgang des zweiten Verzögerungsgliedes D2 ein Zähltakt zugeführt wird, erhöht oder verringert der Aufwärts/Abwärts-Zähler seinen Zählwert in Abhängigkeit davon, ob zum Zeitpunkt des Auftretens des jeweiligen Zähltaktes am Zählereingang E das Gleichheitssignal oder das Ungleichheitssignal anlegt.

Das Ausgangssignal des zweiten Verzögerungsgliedes D2 setzt außerdem FF2 zurück.

Hat der als Integrator I fungierende Zähler eine bestimmte obere Zählwertgrenze oder eine bestimmte untere Zählwertgrenze erreicht, wird über den Ausgang A des Integrators I auf den Steuereingang S des durch einen Zähler gebildeten programmierbaren Frequenzteilers PD ein Steuersignal gegeben. Je nach dem, ob der als Integrator I dienende Zähler die obere oder die untere Zählwertgrenze erreicht hat, wird der Zähler des programmierbaren Frequenzteilers PD um einen vorbestimmten Zählwertbetrag herabgesetzt oder erhöht. Diese Zählwertveränderung des programmierbaren Frequenzteilers bewirkt, daß die nächste Flanke des Bitraten-Taktsignals zu einem früheren oder zu einem späteren Zeitpunkt auftritt als wenn der programmierbare Frequenzteiler PD über seinen Steuereingang S nicht beeinflußt worden wäre. Dies wirkt sich als eine Phasenverschiebung des Bitraten-Taktsignals um einen positiven oder einen negativen Phasenwinkelbetrag aus.

Durch Zwischenschaltung des Integrators I zwischen den Ausgang des XOR-Verknüpfungsgliedes und den Steuereingang S des programmierbaren Frequenzteilers PD wird erreicht, daß ein Eingriff in den Zählvorgang des programmierbaren Frequenzteilers PD und damit eine Phasenverschiebung des Bitraten-Taktsignals BRC erst dann vorgenommen wird, wenn über eine bestimmte Anzahl von Halbbits ein Phasenvorlauf bzw. ein Phasennachlauf des Bitraten-Taktsignals gegenüber dem RDS-Signal festgestellt worden ist. Störsignale, die normalerweise eine Auswirkung nur in einzelnen Halbbits haben, können daher kaum Einfluß auf die Phasensynchronisationsregelung nehmen.

Bei einer bevorzugten Ausführungsform kann zwischen verschiedenen extremen Zählwerten des als Integrator I wirkenden Zählers, bei welchen ein Steuersignal auf den Steuereingang S des programmierbaren Frequenzteilers PD gegeben wird, gewählt werden. Beispielsweise kann man eine Programmierung derart vornehmen, daß die Auswahl des maximalen Zählwertes und die Auswahl des minimalen Zählwertes, bei denen in den Zählvorgang des programmierbaren Frequenzteilers PD eingegriffen wird, in Abhängigkeit davon steuerbar sind, daß beim Einschalten des RDS-Empfängers oder bei dessen Umschaltung auf eine andere als die bisher empfangene Senderempfangsfrequenz auf einen maximalen bzw. einen minimalen Zählwert mit einem geringeren Abstand von einem mittleren Zählwert und nach Ablauf einer vorbestimmten Zeitspanne nach dieser Ein- oder Umschaltung oder bei der Feststellung des Einrastens des Empfängers auf die neue Senderempfangsfrequenz auf einen maximalen Zählwert bzw. einen minimalen Zählwert mit einem größeren Abstand von einem mittleren Zählwert umschaltbar ist. Dies hat den Vorteil, daß unmittelbar nach einem solchen Einschaltoder Umschaltvorgang, also zu einem Zeitpunkt, zu welchem die Bit-PLL des RDS-Empfängers normalerweise noch weit von der Phasensynchronisation von RDS-Signal und Bitraten-Taktsignal entfernt ist, pro Zeiteinheit häufiger in den Zählvorgang des programmierbaren Frequenzteilers PD eingegriffen wird und dadurch die gewünschte Phasensynchronisation schneller erreicht wird als bei der Verwendung von extremen Zählwerten, die einen größeren Abstand von dem mittleren Zählwert haben. Wenn dann die Einrastung auf die Senderfrequenz gelungen ist und Phasensynchronisation vorliegt, braucht nur noch ein Auseinanderlaufen der Phasen von RDS-Signal und Bitraten-Taktsignal ausgeregelt zu werden, wozu weniger häufige Eingriffe in den Zählvorgang des programmierbaren Frequenzteilers PD ausreichen. Dann können auch relativ häufig auftretende Störungen den Phasenregelungsvorgang nicht fehlerhaft machen.

## Patentansprüche

1. Verfahren zur Phasensynchronisation eines empfängerseitig erzeugten Bitraten-Taktsignals (BRC) mit einem empfängerseitig demodulierten, biphasenmodulierten digitalen RDS-Signal (RDS), die beide die gleiche Bitrate aufweisen, wobei
sich die Bits sowohl des RDS-Signals als auch des Bitraten-Taktsignals (BRC) aus je zwei Halbbits mit unterschiedlichem digitalen Potentialwert des jeweiligen Halbbitimpulses zusammensetzen,
in Abhängigkeit davon, welchen der beiden Logikwerte "1" und "0" das jeweilige RDS-Bit darstellt, das erste oder das zweite RDS-Halbbit einen hohen und das jeweils andere RDS-Halbbit einen niedrigen Digitalwert aufweist,
jeweils zu einem ersten Zeitpunkt (t1), der mit dem Zeitpunkt der ansteigenden oder der abfallenden Flanke des jeweiligen Bits eines ersten der beiden Signale (RDS, BRC) zusammenfällt, der jeweilige Digitalwert des zweiten der beiden Signale (RDS, BRC) als ein erster Probenwert (P1) und zu einem zweiten Zeitpunkt (t2), der gegenüber dem jeweiligen ersten Zeitpunkt (t1) um eine vorbestimmte Verzögerungszeit versetzt ist, die kleiner als eine Halbbitdauer ist, der jeweilige Digitalwert des zweiten der beiden Signale (RDS, BRC) als ein zweiter Probenwert (P2) gemessen wird,
und in Abhängigkeit davon, ob die beiden Probenwerte (P1, P2) jeweils einen unterschiedlichen oder einen gleichen Digitalwert haben, die Phasenlage des Bitraten-Taktsignals (BRC) um einen positiven bzw. einen negativen Phasenwinkel vorbestimmten Phasenwinkelbetrages verschoben wird,
**dadurch gekennzeichnet,**
**daß** als erstes der beiden Signale das RDS-Signal und als das zweite der beiden Signale das Bitraten-Taktsignal (BRC) verwendet werden.

2. Verfahren nach Anspruch 1,
**dadurch gekennzeichnet,**
**daß** eine Verzögerungszeit verwendet wird, die einem Phasenwinkel von 90° entspricht.

3. Verfahren nach Anspruch 1 oder 2,
**dadurch gekennzeichnet,**
**daß** die beiden jeweils zusammengehörenden Probenwerte (P1, P2) einem Vergleich ihrer Digitalwerte unterzogen werden, derart, daß bei Gleichheit der Digitalwerte der beiden Probenwerte (P1, P2) ein erstes Vergleichsergebnissignal und bei Ungleichheit der Digitalwerte der beiden Probenwerte (P1, P2) ein zweites Vergleichsergebnissignal erzeugt wird,
**daß** die Vergleichsergebnissignale integriert werden, derart, daß eines der beiden Vergleichsergebnissignale zu einer Erhöhung des Integrationswertes und das andere Vergleichsergebnissignal zu einer Verringerung des Integrationswertes führt,
und **daß** das Bitraten-Taktsignal beim Erreichen einer oberen Integrationswertgrenze in einer ersten Richtung und beim Erreichen einer unteren Integrationswertgrenze in der entgegengesetzten Richtung um den Phasenwinkel vorbestimmten Phasenwinkelbetrages verschoben wird.

4. Verfahren nach Anspruch 3,
**dadurch gekennzeichnet,**
**daß** zwischen verschiedenen Integrationswertgrenzen, durch deren Erreichen eine Phasenverschiebung ausgelöst wird, gewählt werden kann
und **daß** bei einer Umschaltung auf eine andere als die bisher empfangene Senderempfangsfrequenz niedrige Integrationswertgrenzen und nach Ablauf einer vorbestimmten Zeitspanne nach dieser Umschaltung oder bei der Feststellung des Einrastens des Empfängers auf die andere Senderempfangsfrequenz höhere Integrationswertgrenzen ausgewählt werden.

5. Vorrichtung zur Phasensynchronisation eines in einem Rundfunkempfänger demodulierten, biphasenmodulierten digitalen RDS-Signals (RDS) mit einem empfängerseitig erzeugten Bitraten-Taktsignal (BRC), das die gleiche Bitrate wie das RDS-Signal aufweist, wobei sich die Bits sowohl des RDS-Signals als auch des Bitraten-Taktsignals (BRC) aus je zwei Halbbits mit unterschiedlichem digitalen Potentialwert des jeweiligen Halbbitimpulses zusammensetzen,
in Abhängigkeit davon, welchen der beiden Logikwerte "1" und "0" das jeweilige RDS-Bit darstellt, das erste oder das zweite RDS-Halbbit einen hohen und das jeweils andere RDS-Halbbit einen niedrigen Digitalwert aufweist,
jeweils zu einem ersten Zeitpunkt (t1), der mit dem Zeitpunkt der ansteigenden oder der abfallenden Flanke des jeweiligen Bits eines ersten der beiden Signale (RDS, BRC) zusammenfällt, der jeweilige Digitalwert des zweiten der beiden Signale (RDS, BRC) als ein erster Probenwert (P1) und zu einem zweiten Zeitpunkt (t2), der gegenüber dem jeweiligen ersten Zeitpunkt (t1) um eine vorbestimmte Verzögerungszeit versetzt ist, die kleiner als eine Halbbitdauer ist, der jeweilige Digitalwert des zweiten der beiden Signale (RDS, BRC) als ein zweiter Probenwert (P2) gemessen wird,
und in Abhängigkeit davon, ob die beiden Probenwerte (P1, P2) jeweils einen unterschiedlichen oder einen gleichen Digitalwert haben, die Phasenlage des Bitraten-Taktsignals (BRC) um einen positiven bzw. einen negativen Phasenwinkel vorbestimmten Phasenwinkelbetrages verschoben wird,
mit einem empfängerseitigen Oszillator
und mit einem programmierbaren Frequenzteiler (PD), mit dem die Ausgangsfrequenz (OF) des Oszillators auf die Frequenz des Bitraten-Taktsignals (BRC) herabteilbar ist und dessen Ausgang das Bitraten-Taktsignal (BRC) liefert,
**dadurch gekennzeichnet,**
**daß** das erste der beiden Signale durch das RDS-Signal und das zweite der beiden Signale durch das Bitraten-Taktsignal (BRC) gebildet sind,
**daß** ein Flankendetektor (FF2) vorgesehen ist, der beim Auftreten der ansteigenden und/oder der abfallenden Flanken des RDS-Signals ein erstes Abtaststeuersignal abgibt,
**daß** eine Verzögerungsschaltung (D1) vorgesehen ist, die nach Ablauf der vorbestimmten Verzögerungszeit seit dem Auftreten des ersten Abtaststeuersignals ein zweites Abtaststeuersignal abgibt,
**daß** eine Zwischenspeicherschaltung (FF3, FF4) vorgesehen ist, in welche die zu den Zeitpunkten (t1, t2) des Auftretens des ersten bzw. des zweiten Abtaststeuersignals jeweils vorhandenen Digitalwerte des vom programmierbaren Frequenzteiler (PD) gelieferten Bitraten-Taktsignals (BRC) einlesbar sind, daß mit dem Ausgang der Zwischenspeicherschaltung (FF3, FF4) eine Vergleichsschaltung (XOR) verbunden ist, die in Abhängigkeit davon, ob die beiden in der Zwischenspeicherschaltung (FF3, FF4) jeweils gespeicherten Digitalwerte gleich oder ungleich sind, an einem Ausgang ein Gleichheits-Signal oder ein Ungleichheits-Signal liefert,
**daß** ein digitaler Integrator (I) vorgesehen ist, der eingangsseitig mit dem Ausgang der Vergleichsschaltung (XOR) verbunden ist, mit dem die vom Ausgang der Vergleichsschaltung (XOR) gelieferten Signale integrierbar sind und der an einem Integratorausgang beim Erreichen einer vorbestimmten oberen Integrationswertgrenze ein erstes Integratorausgangssignal und beim Erreichen einer vorbestimmten unteren Integrationswertgrenze ein zweites Integratorausgangssignal abgibt,
und **daß** der programmierbare Frequenzteiler (PD) einen Steuereingang (S) aufweist, der mit dem Integratorausgang verbunden ist und dessen jeweiliger Zählwert beim Erhalt des ersten Integratorausgangssignals in der einen Zählrichtung und beim Erhalt des zweiten Integratorausgangssignals in der anderen Zählrichtung um einen vorbestimmten Zählwertbetrag veränderbar ist.

6. Vorrichtung nach Anspruch 5,
**dadurch gekennzeichnet,**
**daß** dem Flankendetektor (FF2) eine Synchronisationstufe (FF1) vorgeschaltet ist, mittels welcher die ansteigende und/oder die abfallende Flanke des RDS-Signals mit einer vorbestimmten Flanke des vom Oszillator gelieferten Oszillatorsignals (OF) synchronisierbar ist.

7. Vorrichtung nach Anspruch 6,
**dadurch gekennzeichnet,**
**daß** die Synchronisationsstufe ein erstes D-Flipflop (FF1) aufweist, dessen D-Eingang das RDS-Signal und dessen Takteingang das Oszillatorsignal (OF) zugeführt werden und dessen Q-Ausgang das mit den Oszillatorsignal (OF) synchronisierte RDS-Signal liefert.

8. Vorrichtung nach einem der Ansprüche 5 bis 7,
**dadurch gekennzeichnet,**
**daß** der Flankendetektor ein zweites D-Flipflop (FF2) aufweist, dessen Takteingang das RDS-Signal bzw. bei Verwendung einer Synchronisationsstufe nach Anspruch 6 oder 7 das mit dem Oszillatorsignal (OF) synchronisierte RDS-Signal zugeführt wird, dessen D-Eingang mit einem konstant bleibenden Logikwert beaufschlagt wird und dessen Q-Ausgang das erste Abtaststeuersignal liefert,
und **daß** ein Eingangsanschluß der Verzögerungsschaltung (D1) mit dem Q-Ausgang des ersten D-Flipflop (FF2) verbunden ist.

9. Vorrichtung nach einem der Ansprüche 5 bis 8,
**dadurch gekennzeichnet,**
**daß** die Zwischenspeicherschaltung ein drittes D-Flipflop (FF3) und ein viertes D-Flipflop (FF4) aufweist, deren D-Eingänge je mit dem Ausgang des programmierbaren Teilers (PD), deren Takteingänge mit dem Ausgang des ersten D-Flipflop (FF2) bzw. mit dem Ausgang der Verzögerungsschaltung (D1) und deren Q-Ausgänge mit je einem Eingang der Vergleichsschaltung (XOR) verbunden sind.

10. Vorrichtung nach einem der Ansprüche 5 bis 9,
**dadurch gekennzeichnet,**
**daß** die Vergleichsschaltung eine XOR-Verknüpfungsschaltung aufweist.

11. Vorrichtung nach einem der Ansprüche 5 bis 10,
**dadurch gekennzeichnet,**
**daß** der Integrator (I) einen Aufwärts/Abwärts-Zähler aufweist, der einen Aufwärts/Abwärts-Zählsteuereingang aufweist, der mit dem Ausgang der Vergleichsschaltung (XOR) verbunden ist, und der beim Erreichen eines maximalen Zählwertes das erste Integratorausgangssignal und beim Erreichen eines minimalen Zählwertes das zweite Integratorausgangssignal liefert.

12. Vorrichtung nach Anspruch 11,
**dadurch gekennzeichnet,**
**daß** für den maximalen Zählwert und für den minimalen Zählwert verschiedene Zählwerte des Aufwärts/Abwärts-Zählers wählbar sind.

13. Vorrichtung nach Anspruch 12,
**dadurch gekennzeichnet,**
**daß** die Auswahl des maximalen Zählwertes und die Auswahl des minimalen Zählwertes in Abhängigkeit von einer Auswahlschaltung steuerbar sind, derart, daß bei einer Umschaltung auf eine andere als die bisher empfangene Senderempfangsfrequenz auf einen maximalen bzw. einen minimalen Zählwert mit einem geringeren Abstand von einem mittleren Zählwert und nach Ablauf einer vorbestimmten Zeitspanne nach dieser Umschaltung oder bei der Feststellung des Einrastens des Empfängers auf die andere Senderempfangsfrequenz auf einen maximalen Zählwert bzw. einen minimalen Zählwert mit einem größeren Abstand von einem mittleren Zählwert umschaltbar ist.

14. RDS-Bit-PLL für ein Radioempfangsgerät mit RDS-Empfangsmöglichkeit,
**gekennzeichnet durch** eine Phasensynchronisationsvorrichtung nach einem der Ansprüche 5 bis 13.

15. Radioempfangsgerät mit einer RDS-Bit-PLL nach Anspruch 14.

16. RDS-Rundfunksystem mit einem RDS-Signale aussendenden Rundfunksender und mindestens einem Radioempfangsgerät mit RDS-Empfangsmöglichkeit,
**dadurch gekennzeichnet,**
**daß** das Radioempfangsgerät eine RDS-Bit-PLL nach Anspruch 14 aufweist.

## Claims

1. A method of phase synchronization of a bit rate clock signal (BRC) generated on the receiver side with a biphase-modulated, digital RDS signal (RDS) that is demodulated on the receiver side, with both signals having the same bit rate,
wherein the bits both of the RDS signal and of the bit rate clock signal (BRC) are each composed of two half bits having different digital potential values of the respective half bit pulse,
wherein, depending on which one of the two logic values "1" and "0" is represented by the respective RDS bit, the first or the second RDS half bit has a high digital value and the respective other RDS half bit has a low digital value,
wherein, at a respective first time (t1) coinciding with the time of the rising or falling edge of the respective bit of a first one of the two signals (RDS, BRC), the respective digital value of the second one of the two signals (RDS, BRC) is measured as a first sample value (P1), and at a second time (t2) shifted from the respective first time (t1) by a predetermined delay time that is shorter than a half bit duration, the respective digital value of the second one of the two signals (RDS, BRC) is measured as a second sample value (P2),
and wherein, depending on whether the two sample values (P1, P2) each have a different or an identical digital value, the phase position of the bit rate clock signal (BRC) is shifted by a positive or a negative phase angle of predetermined phase angle amount, respectively,
**characterized in**
**that** the RDS signal is used as the first one of said two signals and the bit rate clock signal (BRC) is used as the second one of said two signals.

2. A method according to claim 1,
**characterized in**
**that** a delay time is used corresponding to a phase angle of 90°.

3. A method according to claim 1 or 2,
**characterized in**
**that** the two respectively associated sample values (P1, P2) are subjected to a comparison of their digital values, such that when the digital values of the two sample values (P1, P2) are identical, a first comparison result signal is produced, and when the two digital values of the two sample values (P1, P2) are different, a second comparison result signal is produced,
**that** the comparison result signals are integrated such that one of the two comparison result signals leads to an increase of the integration value and the other comparison result signal leads to a decrease of the integration value,
and in that the bit rate clock signal, upon reaching of an upper integration value limit in a first direction and upon reaching of a lower integration value limit in the opposite direction, is shifted by said phase angle of predetermined phase angle amount.

4. A method according to claim 3,
**characterized in**
**that** a selection can be made among various integration value limits which, upon reaching thereof, cause a phase shift,
and in that, upon switching over to a transmitter receiving frequency different from that received so far, low integration value limits are selected, and upon expiration of a predetermined period of time after such switching over or upon determination of latching of the receiver to the other transmitter receiving frequency, higher integration value limits are selected.

5. An apparatus for phase synchronization of a biphase-modulated, digital RDS signal (RDS) demodulated in a radio receiver with a bit rate clock signal (BRC) generated on the receiver side and having the same bit rate as the RDS signal, wherein
the bits both of the RDS signal and of the bit rate clock signal (BRC) are each composed of two half bits having different digital potential values of the respective half bit pulse,
wherein, depending on which one of the two logic values "1" and "0" is represented by the respective RDS bit, the first or the second RDS half bit has a high digital value and the respective other RDS half bit has a low digital value,
wherein, at a respective first time (t1) coinciding with the time of the rising or falling edge of the respective bit of a first one of the two signals (RDS, BRC), the respective digital value of the second one of the two signals (RDS, BRC) is measured as a first sample value (P1), and at a second time (t2) shifted from the respective first time (t1) by a predetermined delay time that is shorter than a half bit duration, the respective digital value of the second one of the two signals (RDS, BRC) is measured as a second sample value (P2),
and wherein, depending on whether the two sample values (P1, P2) each have a different or an identical digital value, the phase position of the bit rate clock signal (BRC) is shifted by a positive or a negative phase angle of predetermined phase angle amount, respectively,
said apparatus comprising an oscillator on the receiver side and a programmable frequency divider (PD) by means of which the output frequency (OF) of said oscillator can be divided down to the frequency of the bit rate clock signal (BRC) and whose output delivers the bit rate clock signal (BRC),
**characterized in**
**that** the first one of said two signals is constituted by the RDS signal and the second one of said two signals is constituted by the bit rate clock signal (BRC),
**that** an edge detector (FF2) is provided which issues a first detection control signal upon occurrence of the rising and/or falling edges of the RDS signal,
**that** a delay circuit (D1) is provided which issues a second detection control signal upon expiration of the predetermined delay time as of occurrence of the first detection control signal,
**that** a temporary storage circuit (FF3, FF4) is provided adapted to have read thereinto the respective digital values of the bit rate clock signal (BRC) supplied by the programmable frequency divider (PD), which are present at the times (t1, t2) of occurrence of the first and second detection control signal, respectively,
**that** the output of the temporary storage circuit (FF3, FF4) has a comparator circuit (XOR) connected thereto which, depending on whether the two digital values respectively stored in said temporary storage circuit (FF3, FF4) are equal or un equal, delivers an equality signal or an inequality signal at an output,
**that** a digital integrator (I) is provided which is connected on the input side to the output of the comparator circuit (XOR) and through which the signals delivered from the output of the comparator circuit (XOR) can be integrated and which issues at an integrator output a first integrator output signal when a predetermined upper integration value limit is reached, and a second integrator output signal when a predetermined lower integration value limit is reached,
and in that the programmable frequency divider (PD) has a control input (S) which is connected to the integrator output and whose respective count value can be altered by a predetermined count value amount in the one counting direction upon receipt of the first integrator output signal and in the other counting direction upon receipt of the second integrator output signal.

6. An apparatus according to claim 5,
**characterized in**
**that** a synchronization stage (FF1) is connected upstream of the edge detector (FF2), which is adapted to synchronize the rising and/or falling edge of the RDS signal with a predetermined edge of the oscillator signal (OF) delivered by the oscillator.

7. An apparatus according to claim 6,
**characterized in**
**that** the synchronization stage comprises a first D-type flipflop (FF1) having the RDS signal supplied to its D-type input and having the oscillator signal (OF) supplied to its clock input and delivering at its Q output the RDS signal that is synchronized with the oscillator signal (OF).

8. An apparatus according to any one of claims 5 to 7,
**characterized in**
**that** the edge detector comprises a second D-type flipflop (FF2) which is fed at its clock input with the RDS signal or, in case of use of a synchronization stage according to claim 6 or 7, with the RDS signal that is synchronized with the oscillator signal (OF), which is acted upon at its D-type input with a logic value that remains constant, and whose Q output delivers the first detection control signal,
and in that an input terminal of the delay circuit (D1) is connected to the Q output of the first D-type flipflop (FF2).

9. An apparatus according to any one of claims 5 to 8,
**characterized in that** the temporary storage cir cuit comprises a third D-type flipflop (FF3) and a fourth D-type flipflop (FF4) whose D-type inputs are each connected to the output of the programmable frequency divider (PD), whose clock in puts are connected to the output of the first D-type flipflop (FF2) and to the output of the delay circuit (D1), respectively, and whose Q outputs are connected to one input of the comparator circuit (XOR) each.

10. An apparatus according to any one of claims 5 to 9,
**characterized in**
**that** the comparator circuit com prises an XOR logic circuit.

11. An apparatus according to any one of claims 5 to 10,
**characterized in**
**that** the integrator (I) comprises an upward/downward counter having an upward/downward counting control input which is connected to the output of the comparator circuit (XOR) and which delivers the first integrator output signal when a maximum count value is reached and the second integrator output signal when a minimum count value is reached.

12. An apparatus according to claim 11,
**characterized in**
**that** various count values of the upward/downward counter can be selected for the maximum count value and the minimum count value.

13. An apparatus according to claim 12,
**characterized in**
**that** the selection of the maximum count value and the selection of the minimum count value are controllable as a function of a selection circuit such that, upon switching over to a different transmitter receiving frequency than the one received so far, switching over is possible to a maximum or a minimum count value having a lesser distance from an average count value, and upon expiration of a predetermined period of time after such switching over or upon determination of latching of the receiver to the other transmitter receiving frequency, switching over is possible to a maximum count value or a minimum count value having a larger distance from an average count value.

14. An RDS bit PLL for a radio receiver with RDS receiving function,
**characterized by** a phase synchronization apparatus according to any one of claims 5 to 13.

15. A radio receiver comprising an RDS bit PLL according to claim 14.

16. An RDS radio system comprising a radio transmitter broadcasting RDS signals and at least one radio receiver with RDS receiving function,
**characterized in that** the radio receiver comprises an RDS bit PLL according to claim 14.

## Revendications

1. Procédé pour synchroniser en phase un signal d'horloge de cadence de bits (BRC), produit côté récepteur, avec un signal RDS numérique modulé de façon bi-phasée (RDS), démodulé côté récepteur, les deux signaux présentant la même cadence de bits, dans lequel les bits du signal RDS et du signal d'horloge de cadence de bit (BRC) se composent chacun de deux demi-bits présentant une valeur numérique de potentiel différente, le premier ou le deuxième demi-bit RDS présentant une valeur numérique haute et l'autre demi-bit RDS une valeur numérique basse selon que le bit RDS présente la valeur logique "1" ou "0", dans lequel, à un premier instant (t1) correspondant au flanc montant ou au flanc descendant du bit courant d'un premier des deux signaux (RDS, BRC), la valeur numérique courante du deuxième des deux signaux (RDS, BRC) est mesurée pour former une première valeur de test (P1), et, à un deuxième instant (t2) retardé par rapport au premier instant (t1) d'une durée prédéterminée inférieure à la durée d'un demi-bit, la valeur numérique courante du deuxième des deux signaux (RDS, BRC) est mesurée pour former une deuxième valeur de test (P2), et dans lequel, selon que les deux valeurs de test (P1, P2) présentent une valeur numérique différente ou identique, la phase du signal d'horloge de cadence de bits (BRC) est décalée d'un angle de phase positif ou négatif de valeur prédéterminée, **caractérisé en ce que** le signal RDS est utilisé comme premier des deux signaux et le signal d'horloge de cadence de bits (BRC) est utilisé comme deuxième des deux signaux.

2. Procédé selon la revendication 1, **caractérisé en ce qu'**on utilise un retard correspondant à un angle de phase de 90°.

3. Procédé selon la revendication 1 ou 2, **caractérisé en ce que** les valeurs numériques des deux valeurs de test associées (P1, P2) sont comparées, un premier signal de résultat de comparaison étant produit en cas d'égalité des valeurs numériques des deux valeurs de test (P1, P2) et un deuxième signal de résultat de comparaison étant produit en cas d'inégalité des valeurs numériques des deux valeurs de test (P1, P2), **en ce que** les signaux de résultat de comparaison sont intégrés, un des deux signaux de résultat de comparaison conduisant à une augmentation de la valeur d'intégration et l'autre signal de résultat de comparaison conduisant à une diminution de la valeur d'intégration, et **en ce que** le signal d'horloge de cadence de bits est décalé de l'angle de phase de valeur prédéterminée dans une première direction lorsqu'une limite supérieure de valeur d'intégration est atteinte et dans une direction opposée lorsqu'une limite inférieure de valeur d'intégration est atteinte.

4. Procédé selon la revendication 3, **caractérisé en ce qu'**il peut être choisi parmi différentes limites de valeur d'intégration, un décalage de phase étant obtenu lorsque celles-ci sont atteintes, et **en ce que** des limites de valeur d'intégration basses sont choisies lors d'une commutation sur une fréquence de réception autre que celle reçue jusqu'alors, et des limites de valeur d'intégration plus élevées sont choisies après l'écoulement d'un intervalle de temps prédéterminé après cette commutation ou lors de l'accord du récepteur sur cette autre fréquence de réception.

5. Dispositif pour synchroniser en phase un signal RDS numérique modulé de façon bi-phasée, démodulé dans un récepteur radio (RDS), avec un signal d'horloge de cadence de bits produit côté récepteur (BRC) présentant la même cadence de bits que le signal RDS, dans lequel les bits du signal RDS et du signal d'horloge de cadence de bits (BRC) se composent chacun de deux demi-bits présentant une valeur numérique de potentiel différente, le premier ou le deuxième demi-bit RDS présentant une valeur numérique haute et l'autre demi-bit RDS une valeur numérique basse selon que le bit RDS présente la valeur logique "1" ou "0", dans lequel, à un premier instant (t1) correspondant au flanc montant ou au flanc descendant du bit courant d'un premier des deux signaux (RDS, BRC), la valeur numérique courante du deuxième des deux signaux (RDS, BRC) est mesurée pour former une première valeur de test (P1) et, à un deuxième instant (t2) retardé par rapport au premier instant (t1) d'une durée prédéterminée inférieure à la durée d'un demi-bit, la valeur numérique courante du deuxième des deux signaux (RDS, BRC) est mesurée pour former une deuxième valeur de test (P2), et dans lequel, selon que les deux valeurs de test (P1, P2) présentent une valeur numérique différente ou identique, la phase du signal d'horloge de cadence de bits (BRC) est décalée d'un angle de phase positif ou négatif de valeur prédéterminée, le dispositif comportant un oscillateur côté réception et un diviseur de fréquence programmable (PD) grâce auquel la fréquence de sortie (OF) de l'oscillateur peut être divisée pour fournir la fréquence du signal d'horloge de cadence de bits (BRC) et dont la sortie fournit le signal d'horloge de cadence de bits (BRC), **caractérisé en ce que** le premier des deux signaux est formé par le signal RDS et le deuxième des deux signaux par le signal d'horloge de cadence de bits (BRC), **en ce qu'**il est prévu un détecteur de flancs (FF2) qui fournit un premier signal de commande d'échantillonnage lors de l'apparition des flancs montants et/ou descendants du signal RDS, **en ce qu'**il est prévu un circuit de retard (D1), qui fournit un deuxième signal de commande d'échantillonnage après l'écoulement de ladite durée prédéterminée après l'apparition du premier signal de commande d'échantillonnage, **en ce qu'**il est prévu un circuit de mémoire intermédiaire (FF3, FF4) dans lequel peuvent être mémorisées les valeurs numériques du signal d'horloge de cadence de bits (BRC) fourni par le diviseur de fréquence programmable (PD) présentes respectivement aux instants (t1, t2) d'apparition du premier, respectivement deuxième, signal de commande d'échantillonnage, **en ce qu'**un circuit comparateur (XOR) est relié à la sortie du circuit de mémoire intermédiaire (FF3, FF4), fournissant sur une sortie un signal d'égalité ou un signal d'inégalité selon que les deux valeurs numériques mémorisées dans le circuit de mémoire intermédiaire (FF3, FF4) sont égales ou non, **en ce qu'**il est prévu un intégrateur numérique (I) relié en entrée à la sortie du circuit comparateur (XOR), grâce auquel les signaux fournis en sortie du circuit comparateur (XOR) peuvent être intégrés et fournissant sur une sortie un premier signal de sortie d'intégrateur lorsqu'une limite supérieure prédéterminée de valeur d'intégration est atteinte et un deuxième signal de sortie d'intégrateur lorsqu'une limite inférieure prédéterminée de valeur d'intégration est atteinte, et **en ce que** le diviseur de fréquence programmable (PD) présente une entrée de commande (S) reliée à la sortie de l'intégrateur et dont la valeur de comptage courante peut être modifiée d'une quantité prédéterminée dans une des directions de comptage lorsque le premier signal de sortie d'intégrateur est obtenu et dans l'autre direction de comptage lorsque le deuxième signal de sortie d'intégrateur est obtenu.

6. Dispositif selon la revendication 5, **caractérisé en ce que**, avant le détecteur de flancs (FF2), est connecté un étage de synchronisation (FF1) grâce auquel le flanc montant et/ou descendant du signal RDS peut être synchronisé avec un flanc prédéterminé du signal fourni par l'oscillateur (OF).

7. Dispositif selon la revendication 6, **caractérisé en ce que** l'étage de synchronisation comprend une première bascule D (FF1), dont l'entrée D reçoit le signal RDS et l'entrée d'horloge le signal d'oscillateur (OF), et dont la sortie Q fournit le signal RDS synchronisé avec le signal d'oscillateur (OF).

8. Dispositif selon une des revendications 5 à 7, **caractérisé en ce que** le détecteur de flancs comporte une deuxième bascule D (FF2), dont l'entrée d'horloge reçoit le signal RDS ou le signal RDS synchronisé avec le signal d'oscillateur (OF) lorsqu'un étage de synchronisation selon la revendication 6 ou 7 est utilisé, dont l'entrée D est alimentée par une valeur logique constante, et dont la sortie Q fournit le premier signal de commande d'échantillonnage, et **en ce qu'**une borne d'entrée du circuit de retard (D1) est reliée à la sortie Q de la deuxième bascule D (FF2).

9. Dispositif selon une des revendications 5 à 8, **caractérisé en ce que** le circuit de mémoire intermédiaire comporte une troisième bascule D (FF3) et une quatrième bascule D (FF4), dont les entrées D sont reliées à la sortie du diviseur programmable (PD), dont les entrées d'horloge sont reliées respectivement à la sortie de la deuxième bascule D (FF2) et à la sortie du circuit de retard (D1), et dont les sorties Q sont reliées chacune à une entrée respective du circuit de comparaison (XOR).

10. Dispositif selon une des revendications 5 à 9, **caractérisé en ce que** le circuit comparateur comporte une porte logique de type OU EXCLUSIF.

11. Dispositif selon une des revendications 5 à 10, **caractérisé en ce que** l'intégrateur (I) comporte un compteur/décompteur présentant une entrée de comptage/décomptage reliée à la sortie du circuit comparateur (XOR) et fournissant le premier signal de sortie d'intégrateur lorsqu'une valeur maximale de comptage est atteinte et le deuxième signal de sortie d'intégrateur lorsqu'une valeur minimale de comptage est atteinte.

12. Dispositif selon la revendication 11, **caractérisé en ce que** diverses valeurs de comptage du compteur/décompteur peuvent être choisies pour la valeur maximale de comptage et pour la valeur minimale de comptage.

13. Dispositif selon la revendication 12, **caractérisé en ce que** le choix de la valeur maximale de comptage et le choix de la valeur minimale de comptage peuvent être effectués à l'aide d'un circuit de sélection, une valeur maximale, respectivement minimale, de comptage présentant un écart faible par rapport à une valeur de comptage moyenne étant choisie lors d'une commutation sur une fréquence de réception autre que celle reçue jusqu'alors, et une valeur maximale, respectivement minimale, de comptage présentant un écart plus grand par rapport à une valeur de comptage moyenne étant choisie après écoulement d'un intervalle de temps prédéterminé après cette commutation ou lors de l'accord du récepteur sur l'autre fréquence de réception.

14. Boucle à verrouillage de phase numérique RDS ("RDS-Bit-PLL") pour récepteur radio pouvant recevoir des signaux RDS, **caractérisée par** un dispositif de synchronisation de phase selon une des revendications 5 à 13.

15. Récepteur radio comportant une boucle à verrouillage de phase numérique RDS ("RDS-Bit-PLL") selon la revendication 14.

16. Système radio RDS comportant un émetteur radio émettant des signaux RDS et au moins un récepteur radio pouvant recevoir des signaux RDS ("RDS-Bit-PLL"), **caractérisé en ce que** le récepteur radio comporte une boucle à verrouillage de phase numérique RDS selon la revendication 14.
